# EUROPÄISCHE PATENTSCHRIFT

(11) **EP 2 497 354 B1**
(45) Veröffentlichungstag und Bekanntmachung des Hinweises auf die Patenterteilung: **02.09.2015**
(21) Anmeldenummer: 12151012.7
(22) Anmeldetag: 13.01.2012
(51) Int. Cl.: A01D 41/12, B65G 33/22

(54) **Entleervorrichtung einer selbstfahrenden Erntemaschine**
Unloading device of a self-propelled harvester
Dispositif de vidage d'une moissonneuse automobile

(30) Priorität: 10.03.2011 DE 102011001180
(43) Veröffentlichungstag der Anmeldung: 12.09.2012
(73) Patentinhaber: CLAAS Selbstfahrende Erntemaschinen GmbH, 33428 Harsewinkel (DE)
(72) Erfinder: Claes, Ulrich, 49201 Dissen (DE); Röwekamp, Thomas, 49134 Wallenhorst (DE)

(56) Entgegenhaltungen:
- EP-A1- 2 279 655
- US-A1- 2008 305 843
- US-B1- 7 011 292
- US-B2- 7 584 836

## Beschreibung

Die Erfindung betrifft eine Entleervorrichtung für einen Sammeltank einer selbstfahrenden Erntemaschine, mit einer in einem Auslaufrohr gelagerten Förderschnecke, die während eines Entleervorganges antreibbar ist, wobei in einem auslassseitigen Endbereich des Auslaufrohrs zur Lagerung der Förderschnecke eine zentrische Lageaufnahme vorgesehen ist und das Auslaufrohr im Endbereich eine Klappe aufweist, die um eine Drehachse schwenkbar und über eine Betätigungseinrichtung gezielt aus einer Öffnungsstellung in eine Schließstellung und umgekehrt überführbar ist. Die Erfindung betrifft des Weiteren ein Verfahren zur Steuerung einer derartigen Entleervorrichtung.

Entleervorrichtungen werden an selbstfahrenden Erntemaschinen vorgesehen, um das über die jeweilige Erntemaschine aufgenommene Erntegut, wie beispielsweise Getreide, Raps, Grassamen, Mais usw. aus einem Sammeltank der Erntemaschine in einen separaten Transportcontainer zum Abtransport zu überführen. Bei Mähdreschern ist hierzu ein Auslaufrohr vorgesehen, welches zu Beginn des Entleervorganges aus einer am Mähdrescher angeklappten Position ausgeschwenkt werden kann, so dass ein Abtanken des aufgenommenen Getreides aus dem Korntank des Mähdreschers über das Auslaufrohr in den seitlich zum Mähdrescher positionierten Transportcontainer stattfinden kann. Im Inneren des als Korntank ausgebildeten Sammeltanks sind Fördereinrichtungen angeordnet, die das Getreide beim Abtanken in Richtung der Entleervorrichtung transportieren. Zur Förderung des Getreides durch das Auslaufrohr ist üblicherweise eine Förderschnecke im Auslaufrohr vorgesehen, die über einen Antrieb und ein zwischengeschaltetes Getriebe in Drehbewegung versetzt werden kann und hierbei das Getreide zu einem Ende des Auslaufrohrs fördert. An diesem Ende ist das Auslaufrohr mit einem Krümmer oder einer flexiblen Auslaufrohrtülle versehen, so dass das Getreide in Richtung des Transportcontainers geleitet wird.

Allerdings kann zum Ende dieses Entleervorganges, wenn das Auslaufrohr nicht vollständig entleert ist, das Problem auftreten, dass noch im Auslaufrohr befindliches Erntegut als sogenannte Rieselverluste ungewollt aus dem Auslaufrohr gelangt und auf den Ackerboden neben dem Mähdrescher fällt. Insbesondere wird beim Anklappen des Auslaufrohrs an den Mähdrescher durch die hierbei auszuführende Schwenkbewegung des Auslaufrohrs und des Getriebes eine Drehbewegung der Förderschnecke hervorgerufen, durch welche noch im Auslaufrohr befindliches Getreide weiter befördert und ausgebracht wird.

Aus der DE 196 06 730 A1 geht eine Entleervorrichtung einer selbstfahrenden Erntemaschine hervor, bei welcher in einem Auslaufrohr eine antreibbare Förderschnecke aufgenommen ist, über die Erntegut entlang des Auslaufrohrs gefördert und welche über ein zwischengeschaltetes Getriebe mittels eines Antriebs in Drehbewegung versetzt werden kann. Bei einem Anklappen des Auslaufrohrs nach Beendigung des Entleervorganges ist die Förderschnecke nun kurzzeitig bei einer entsprechenden Anordnung des Getriebes entgegen ihrer Austragsförderrichtung relativ zum Auslaufrohr bewegbar, so dass noch in dem Auslaufrohr befindliches Erntegut mittels der rückwärts drehenden Förderschnecke zurückgefördert wird und ein Rieseln auf das Feld unterbunden werden kann.

Des Weiteren geht aus der US 7,584,836 B2 eine gattungsgemäße Entleervorrichtung einer selbstfahrenden Erntemaschine hervor, wobei bei dieser Entleervorrichtung benachbart zu einer in einem Auslaufrohr antreibbar gelagerten Förderschnecke eine Klappe vorgesehen ist. Diese Klappe ist dabei um eine außerhalb des Auslaufrohres liegende Drehachse schwenkbar aufgenommen und über eine Betätigungseinrichtung gezielt aus einer Öffnungsstellung in eine das Auslaufrohr verschließende Schließstellung überführbar. Die Drehachse ist dabei derartig in einem unteren Bereich des Auslaufrohrs platziert, dass die Klappe in der Öffnungsstellung nicht in das über das Auslaufrohr strömende Erntegut hineinragt. Zum Überführen in die Schließstellung, in welcher die Klappe einen Endbereich des Auslaufrohrs mit einer hierzu korrespondierenden Fläche verschließt, steht die Klappe über eine benachbart zu der Drehachse vorgesehene Anschlussstelle mit der Betätigungseinrichtung in Verbindung. Die Betätigungseinrichtung ist dabei außerhalb des Auslaufrohrs platziert und mit einer Steuerung verbunden. Die US 7,584,836 B2 geht dabei unter anderem von einem Stand der Technik aus, bei dem am Ende eines Auslaufrohrs eine federbelastete Klappe vorgesehen sein soll, die über die Feder in eine das Auslaufrohr verschließende Stellung vorgespannt ist und den Rohrquerschnitt erst ab einer bestimmten geförderten Getreidemenge entsprechend der Überwindung der Federkraft freigibt. Da aber auch bei einer federbelasteten Klappe ein Herausrieseln von Getreide nicht gänzlich verhindert werden kann und eine derartige Klappe auch beim Abtanken des Getreides einen ungewollten Widerstand entgegensetzt, kommen derartige Entleervorrichtungen mit federbelasteten Klappen wegen ihrer funktionellen Probleme nicht zum Einsatz. Ausgehend vom vorstehend beschriebenen Stand der Technik ist es die Aufgabe der vorliegenden Erfindung, eine Entleervorrichtung einer selbstfahrenden Erntemaschine zur Verfügung zu stellen, mittels welcher einerseits zum Ende eines Entleervorganges ein ungewolltes Herausrieseln von Erntegut unterbunden werden kann und anderseits aber während des Entleerbetriebes eine möglichst geringe Beeinträchtigung des über das Auslaufrohr strömenden Ernteguts hervorgerufen wird. Des Weiteren sollte eine derartige Entleervorrichtung eine geringe Störanfälligkeit aufweisen und einfach regelbar sein.

Aus vorrichtungstechnischer Sicht erfolgt eine Lösung der Aufgabe ausgehend vom Oberbegriff des Anspruchs 1 in Verbindung mit dessen kennzeichnenden Merkmalen. Eine verfahrenstechnische Lösung der Aufgabe erfolgt entsprechend der Ausgestaltung des Anspruchs 11. Die jeweils abhängigen Ansprüche geben dabei vorteilhafte Weiterbildungen der Erfindung wieder.

Demnach wird eine Entleervorrichtung vorgeschlagen, die ein Auslaufrohr umfasst, in welchem eine Förderschnecke antreibbar gelagert ist, wobei die Drehachse der Klappe innerhalb eines Förderquerschnittes des Auslaufrohres angeordnet ist. Die Klappe und deren Drehachse werden während eines Entleervorganges von dem Erntegut umströmt. Die Betätigungsvorrichtung verschwenkt nach Beendigung des Enleervorganges die Klappe soweit, dass der Förderquerschnitt des Auslaufrohres zumindest partiell verschlossen ist. Die Erfindung umfasst die technische Lehre, dass die Drehachse der Klappe unmittelbar auf einer der Förderschnecke abgewandten Seite einer radial im Auslaufrohr orientierten Verstrebung der Lageraufnahme platziert ist, wobei die Drehachse der Klappe parallel zu der Verstrebung verlaufend ausgerichtet ist. Dementsprechend ist die Drehachse der Klappe in Strömungsrichtung des Ernteguts unmittelbar hinter und durch die Verstrebung verdeckt angeordnet so dass in der Öffnungsstellung und damit in einer in Längsrichtung des Auslaufrohrs orientierten Position der Klappe dem strömenden Erntegut durch die Klappendicke nur ein geringer Widerstand entgegengesetzt wird. Denn hierbei liegt die Klappe in Strömungsrichtung quasi im Schatten der Verstrebung der Lageraufnahme. Zudem wird hierdurch erreicht dass sich im Bereich der Drehachse der Klappe kaum Erntegut fangen und die Stellbewegung der Klappe behindern oder sogar ein Verschließen des Auslaufrohres über die Klappe unterbinden kann.

Die Klappe kann dabei eine im Wesentlichen kreissegmentförmige Außenkontur aufweisen, wobei die Klappe an der die Längsachse der Förderschnecke kreuzenden Drehachse geführt ist und in ihrer Schließstellung einen unteren Kreisabschnitt des Auslaufrohres abdeckt. Es handelt sich um den Kreisabschnitt, in dem sich im Allgemeinen Reste des Erntegutes sammeln.

In einer bevorzugten Weiterbildung kann die Klappe eine gewölbte Oberfläche aufweisen. Diese von einer flächigen Ausgestaltung der Klappe abweisende Ausführung ist stärker an die strömungstechnischen Gegebenheiten beim Entladen durch die Förderschnecke angepasst, wodurch die Klappe dem ausströmenden Gutstrom weniger Widerstand entgegensetzt.

Weiterhin kann die Drehachse in einem Endbereich des Auslaufrohrs mit einer zentrischen Lageaufnahme endseitig verbunden sein. Unter Lageraufnahme ist hierbei eine Konstruktion zu verstehen, mittels welcher ein endseitiges Lager der Förderschnecke zentrisch im Auslaufrohr gehalten wird. Insbesondere handelt es sich hierbei um eine ein Wälzlager aufnehmende Nabe, die über radial im Auslaufrohr verlaufende Streben mit einem mit dem Auslaufrohr verbundenen Tragrahmen gekoppelt ist. Benachbart zu einer derartigen Lageraufnahme ist nun im Auslaufrohr eine Klappe vorgesehen, welche um eine Drehachse schwenkbar aufgenommen und über eine Betätigungseinrichtung gezielt aus einer Öffnungsstellung in eine das Auslaufrohr zumindest teilweise verschließende Schließstellung und umgekehrt überführt werden kann. Bei einer Klappe handelt es sich um ein in dem Auslaufrohr vorgesehenes Absperrorgan, das je nach Schwenkwinkel den Querschnitt des Auslaufrohrs freigibt oder zumindest teilweise verschließt.

Im Sinne der Erfindung handelt es sich bei der Klappe insbesondere um eine Klappe mit etwa halber Querschnittsfläche des Auslaufrohres, die, wie bereits dargelegt, in Schließstellung den unterhalb der Drehachse befindlichen Teil des Auslaufrohres abdeckt. Dies ist ausreichend, da Erntegut nach Beendigung des Entleervorganges und einer nicht mehr laufenden Förderschnecke nur über die untere Querschnittshälfte des Auslaufrohres aus diesem herausrieselt. Im Rahmen der Erfindung ist aber auch ein Zusammensetzen der Klappe aus zwei Klappenteilen mit jeweils etwa halber Querschnittsfläche des Auslaufrohres denkbar, wobei ein Verschwenken dieser beiden Klappenteile dann über ein entsprechendes Gestänge miteinander gekoppelt ist, so dass bei Überführung in die Öffnungsstellung beide Klappenteile in Strömungsrichtung des Ernteguts verschwenkt werden, um nicht mit der benachbart liegenden Förderschnecke zu kollidieren. Im letztgenannten Fall kann hierdurch auch eine vollständige Abdeckung des Querschnitts des Auslaufrohres erreicht werden.

Im Gegensatz hierzu besteht bei einer Entleervorrichtung gemäß der US 7,584,836 B2 die Gefahr, dass sich Erntegut im Bereich der Mulde, in welche die Anschlussstelle der Klappe mit der Betätigungseinrichtung bei voll geöffneter Klappe eintaucht, ansammelt und bei starken Ansammlungen der Überführung der Klappe in die Öffnungsstellung einen Widerstand entgegensetzt oder diese sogar verhindert. Außerdem kann auch ein unvollständiges Verschließen des Auslaufrohres auftreten, wenn sich Körnerreste im Bereich der Drehachse der Klappe ansammeln, so dass Rieselverluste trotz einer Betätigung der Klappe möglich sind. Zudem muss über die Betätigungseinrichtung ein deutlich größerer Schwenkbereich der Klappe bewerkstelligt werden, was die Hublänge des Aktuators der Betätigungseinrichtung vergrößert.

In Weiterbildung der Erfindung weist die Verstrebung der Lageraufnahme einen, sich in Richtung der Förderschnecke erstreckenden, strömungsoptimierten Querschnitt auf. Beispielsweise kann der Querschnitt sich verjüngend ausgeführt sein. Mittels einer derartigen Verjüngung in Richtung der Förderschnecke kann eine Kontur der Verstrebung realisiert werden, welche dem vorbeiströmenden Erntegut beim Entleerbetrieb einen geringen Strömungswiderstand entgegensetzt. Unter einem verjüngenden Querschnitt ist hierbei eine Verminderung der Strebenstärke in Richtung der Förderschnecke zu verstehen. Dabei kommen insbesondere eine parabelförmige Kontur, eine tropfenähnliche Kontur oder anderweitige konkav in Richtung der Förderschnecke orientierte Konturen in Betracht.

Entsprechend einer weiteren vorteilhaften Ausgestaltung der Erfindung weist die Klappe zumindest im Bereich der Drehachse eine sich zu einem der Drehachse gegenüberliegenden Klappenende hin verjüngende Kontur auf. Auch hierbei kann eine Verminderung des Strömungswiderstandes erreicht werden, indem die Klappe im Bereich der Drehachse und damit im Bereich der Verstrebung eine der Strebenstärke entsprechende Dicke aufweist, welche sich dann zum Klappenende hin zumindest bereichsweise verjüngt, da hierdurch dem über die Klappe strömenden Erntegut dabei ein geringer Widerstand entgegengesetzt wird. Als Kontur kommen auch hierbei ein parabelförmiger Querschnitt, ein tropfenähnlicher Querschnitt oder anderweitig konkav ausgebildete Querschnitte in Betracht.

Gemäß einer weiteren Ausführungsform der Erfindung sind Lagerungen der Klappe als Lagerbrücken ausgestaltet, welche jeweils in Ausnehmungen des Auslaufrohres oder eines Tragrahmens der Lageraufnahme befestigt sind. Eine derartige Ausgestaltung hat hierbei den Vorteil, dass Lagerungen der Klappe gemeinsam mit der Klappe mit geringem Montageaufwand im Endbereich des Auslaufrohres platziert werden können, da diese Lagerbrücken einfach in den Ausnehmungen positioniert und mit dem Auslaufrohr oder dem Tragrahmen der Lageraufnahme verbunden werden. Gleichzeitig wird dabei eine Verschwenkbarkeit der Klappe garantiert, sowie die Ausnehmungen des Auslaufrohres zuverlässig verschlossen. Eine Verbindung der Lagerbrücken mit dem Auslaufrohr oder dem Tragrahmen ist dabei bevorzugt als Verschraubung gestaltet, kann aber auch in anderer Art und Weise erfolgen.

In Weiterbildung der Erfindung erstreckt sich die Klappe zumindest in einem Endbereich entlang der Drehachse radial über das Auslaufrohr hinaus, um eine Anbindung an die außerhalb des Auslaufrohres platzierte Betätigungseinrichtung herzustellen. Vorteilhafterweise kann hierdurch unmittelbar eine Verbindung mit der Betätigungseinrichtung stattfinden.

Entsprechend einer weiteren Ausgestaltung der Erfindung umfasst die Betätigungseinrichtung ein Federelement, welches die Klappe in Richtung der Öffnungsstellung vorspannt.

Vorteilhafterweise weist die Betätigungseinrichtung des Weiteren auch einen Aktuator auf, über welchen die Klappe in die Schließstellung überführbar ist. Durch das Federelement wird dabei erreicht, dass die Klappe im ansonsten unbetätigten Zustand in die Öffnungsstellung bewegt wird und somit auch bei einer auftretenden Störung der Betätigungseinrichtung ein freier Gutsaustritt über das Auslaufrohr gewährleistet ist. Hierdurch lassen sich auch Schäden bei ansonsten geschlossener Klappe und laufender Förderschnecke vermeiden. Mittels eines Aktuators kann die Klappe im Falle einer Betätigung zuverlässig in die Schließstellung überführt werden. Im Rahmen der Erfindung ist dabei eine Ausgestaltung als hydraulischer, elektrischer, pneumatischer Aktuator, etc. denkbar. Zudem kann der Aktuator als eine eine translatorische Bewegung darstellende Baueinheit ausgeführt sein, deren Hubbewegung über ein zwischengeschaltetes Gestänge in eine Drehbewegung der Klappe umgesetzt wird, oder auch als eine eine direkte Drehbewegung hervorrufende Baueinheit gestaltet sein.

In Weiterführung ist das Federelement zudem in den Aktuator integriert, wodurch ein sehr kompakter Aufbau der Betätigungseinrichtung möglich wird.

Gemäß der Erfindung erfolgt eine Steuerung der erfindungsgemäßen Entleervorrichtung, indem die Betätigungseinrichtung über eine Steuerung derart gesteuert wird, dass mit Beginn eines Entleerbetriebes die Klappe in die Öffnungsstellung bewegt wird, während mit Ende des Entleerbetriebes die Klappe in die Schließstellung überführt wird. Hierbei ist die Steuerung insbesondere mit einem Hydraulikventil ausgestaltet, das mit Beginn des Entleerbetriebes in eine erste Stellung bewegt wird, in welcher ein Hydraulikzylinder der Betätigungseinrichtung drucklos geschaltet, also über einem Vorratsbehälter entleert wird, wohingegen das Hydraulikventil mit Ende des Entleerbetriebes in eine zweite Stellung überführt wird, in welche der Hydraulikaktuator mit unter Druck stehendem Fluid beaufschlagt und dadurch die Klappe in die Schließstellung verschwenkt wird. Durch Drucklosschalten des Hydraulikzylinders in der ersten Schaltstellung des Ventils kann die Klappe somit entweder durch ein Federelement der Betätigungseinrichtung oder über das geförderte Erntegut in die Öffnungsstellung bewegt werden, während der Hydraulikzylinder bei der zweiten Stellung des Hydraulikventils die Klappe in die Schließstellung verschwenkt und in dieser Position hält.

Weitere vorteilhafte Ausgestaltungen der Erfindung werden nachstehend anhand einer bevorzugten Ausführungsform erläutert. Es zeigen:
- Fig. 1: eine schematische Ansicht der erfindungsgemäßen Entleervorrichtung,
- Fig. 2A, 2B: perspektivische Ansichten der erfindungsgemäßen Entleervorrichtung gemäß Fig. 1, gezeigt in einer Öffnungs- und einer Schließstellung einer Klappe,
- Fig. 3: eine Schnittansicht senkrecht zu einer Drehachse der Klappe; und
- Fig. 4A: eine perspektivische Ansichten der erfindungsgemäßen Entleervorrichtung gemäß Fig. 1, mit einer alternativen Ausführungsform der Klappe; und

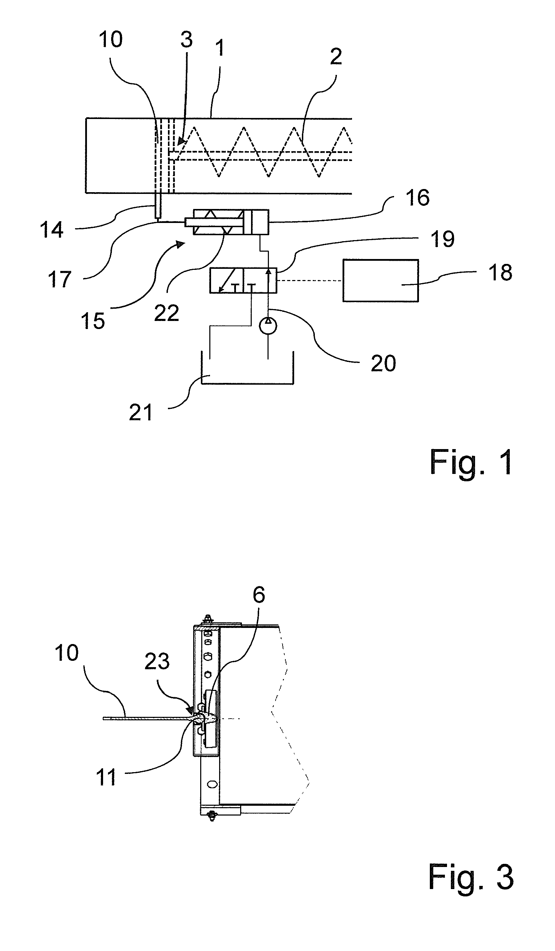

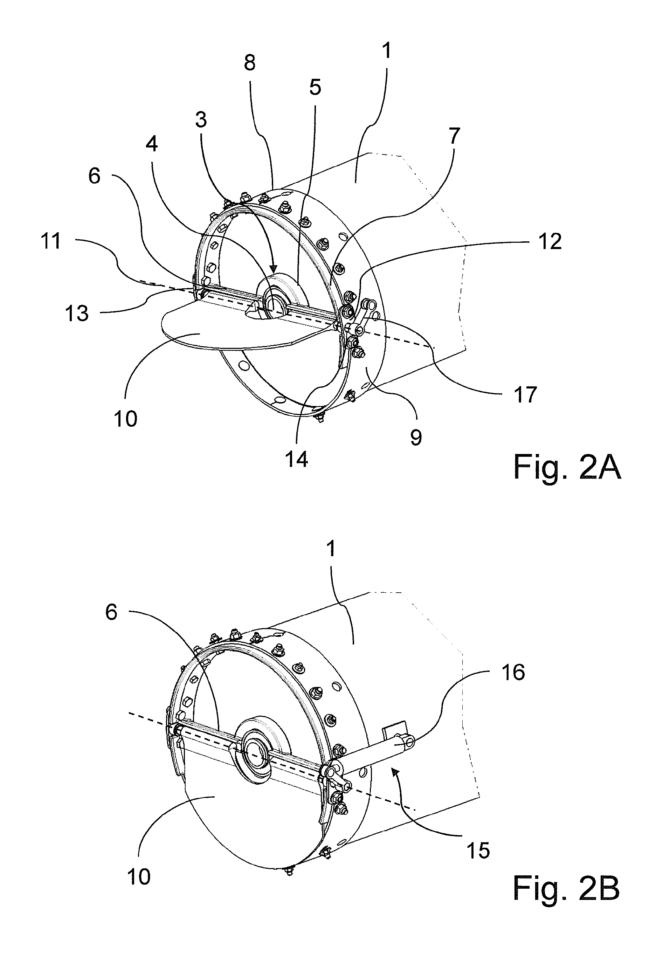

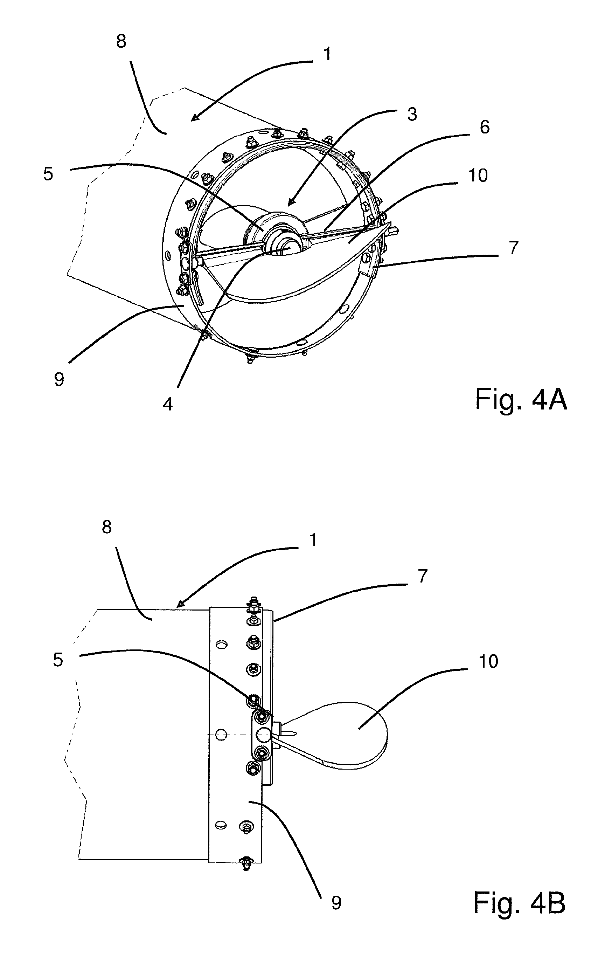

- Fig. 4B: eine Seitenansicht der Entleervorrichtung gemäß Fig. 4A. Aus Fig. 1 geht eine schematische Ansicht der erfindungsgemäßen Entleervorrichtung hervor, welche ein Auslaufrohr 1 umfasst. Mittels dieses Auslaufrohres 1 wird in einer dem Fachmann bekannten Art und Weise Erntegut, wie beispielsweise Getreide, aus einem Auffangbehälter, wie einem Korntank eines Mähdreschers, abgetankt und einem Transportcontainer zum Abtransport zugeführt. Zu diesem Zweck nimmt das Auslaufrohr 1 eine Förderschnecke 2 auf, welche antreibbar gelagert und bei Rotation das zu fördernde Erntegut entlang des Auslaufrohres 1 befördert, wobei die Förderschnecke 2 hierbei im endseitigen Bereich des Auslaufrohres 1 mit einer zentrischen Lageraufnahme 3 verbunden ist. Wie nun in Kombination mit den perspektivischen Ansichten der Fig. 2A und 2B ersichtlich ist, trägt die Lageraufnahme 3 ein radiales Wälzlager 4 der - hier nicht weiter dargestellten - Förderschnecke 2. Zudem ist zu erkennen, dass sich die Lageraufnahme 3 aus einer das Wälzlager 4 umgebenden Nabe 5, einer daran anschließenden und radial im Auslaufrohr 1 orientierten Verstrebung 6 und einem mit der Verstrebung 6 verbundenen Tragrahmen 7 zusammensetzt. Hierbei ist der Tragrahmen 7 mit dem Auslaufrohr 1 mittelbar über Blechsegmente 8 und 9 und Schraubverbindungen verbunden. Über diese Schraubverbindung ist zudem üblicherweise ein - hier ebenfalls nicht dargestellter - Krümmer oder einer flexiblen Auslaufrohrtülle zum Leiten des Ernteguts in den Transportcontainer auf das Auslaufrohr 1 aufgesetzt.

In Fließrichtung ist nun hinter der Lageraufnahme 3 der Förderschnecke 2 liegend eine schwenkbare Klappe 10 platziert. Aus den perspektivischen Ansichten der Fig. 2A und 2B ist hierbei ersichtlich, dass die Klappe 10 um eine Drehachse 11 in Lagerbrücken 12 und 13 schwenkbar aufgenommen ist, wobei diese Lagerbrücken 12 und 13 hierbei in Ausnehmungen des Tragrahmens 7 platziert und mittels Schraubverbindungen an diesem befestigt sind. Die Drehachse 11 der Klappe 10 wird dabei durch einen Wellenstummel 14 gebildet, der sich mit einem Ende radial über das Auslaufrohr 1 hinaus und durch die Lagerbrücke 12 hindurch erstreckt und an diesem Ende mit einer Betätigungseinrichtung 15 in Verbindung steht.

Über diese Betätigungseinrichtung 15 kann die Klappe 10 aus der, in Fig. 2A dargestellten Öffnungsstellung, in welcher der Querschnitt des Auslaufrohres 1 freigegeben ist, in die in Fig. 2B dargestellte Schließstellung, in welcher die untere Hälfte des Querschnitts des Auslaufrohres 1 verschlossen ist, und umgekehrt überführt werden. Dabei umfasst die Betätigungseinrichtung 15 einen Aktuator in Form eines Hydraulikzylinders 16, welcher vorliegend als einfach wirkender Hydraulikzylinder ausgebildet ist und mit dem Wellenstummel 14 über ein Gestänge 17 in Verbindung steht. Eine Stellbewegung des Hydraulikzylinders 16 wird dabei über eine Steuerung 18 und ein zugehöriges Hydraulikventil 19 geregelt, welches vorliegend als 3/2-Wegeventil ausgestaltet ist und in einer ersten, in Fig. 1 dargestellten Stellung den Hydraulikzylinder 16 mit einer Druckleitung 20 und in einer zweiten Stellung drucklos mit einem Vorratsbehälter 21 verbindet. Zudem ist in den Hydraulikzylinder 16 ein Federelement 22 integriert, das den Hydraulikzylinder 16 im drucklos geschalteten Zustand zurückdrückt und damit die Klappe 10 mittelbar in die Öffnungsstellung vorspannt und in dieser Position hält.

In Fig. 3 ist des Weiteren eine Schnittansicht senkrecht zu der Drehachse 11 der Klappe 10 dargestellt. Wie zu erkennen ist, weist die Verstrebung 6 einen Querschnitt auf, welcher sich in Richtung der - hier wiederum nicht dargestellten - Förderschnecke 2 und entgegen der Strömungsrichtung verjüngt. Diese Verjüngung ist hierbei nach Art einer parabelförmigen Kontur gestaltet, wodurch bei Vorbeiströmen des Erntegutes bei einem Entleerbetrieb der selbstfahrenden Erntemaschine dem Erntegut nur ein geringfügiger Strömungswiderstand entgegengesetzt wird. Wie zudem gut in Fig. 3 zu erkennen ist, ist die Klappe 10 mit ihrer Drehachse 11 derart benachbart zu der Verstrebung 6 platziert, dass die Klappe 10 mit ihrer Drehachse in Strömungsrichtung durch die Verstrebung 6 verdeckt und somit mit der Drehachse 11 in deren Schatten liegt. Folglich wird durch die Klappe 10 entlang ihrer Drehachse kein zusätzlicher Strömungswiderstand hervorgerufen. Im weiteren Verlauf weist die Klappe 10 eine, ausgehend von der Drehachse 11 sich in einem Bereich auf die weitere Stärke der Klappe 10 verjüngende Kontur 23 auf, welche tropfenartig ausgestaltet ist und hierbei in der geöffneten Stellung gemäß Fig. 2A ein Vorbeiströmen des Erntegutes unterstützt.

Die Darstellung in den Fig. 4A und 4B unterscheidet sich im Aufbau lediglich durch die Ausgestaltung der Klappe 10 welche anstelle einer im Wesentlichen ebenen Oberfläche eine gewölbte, strömungstechnisch optimierte Oberfläche aufweist, wodurch eine Anpassung an die strömungstechnischen Gegebenheiten des von der Förderschnecke geförderten Entergutes erreichbar ist. Die Oberfläche kann in ihrer Formgebung beispielsweise einem Propeller oder dem Flügel einer Schiffsschraube nachempfunden sein.

Die erfindungsgemäße Entleervorrichtung wird nun derart gesteuert, dass mit Beginn eines Entleerbetriebes der Hydraulikzylinder 16 nicht mehr über die Steuerung 18 betätigt wird, so dass das Federelement 22 die Klappe 10 in die Öffnungsstellung drückt und über die Förderschnecke 2 gefördertes Erntegut an der Klappe 10 vorbeiströmen kann. Wird nun der Entleerbetrieb beendet oder abgebrochen, so wird der Hydraulikzylinder 16 über die Steuerung 18 mittels des Hydraulikventils 19 mit der Druckleitung 20 verbunden und bewegt die Klappe 10 mittels des Gestänges 17 in die in Fig. 2B dargestellte Schließstellung. In dieser Schließstellung kann noch im Auslaufrohr 1 befindliches Erntegut, insbesondere bei einem Zurückschwenken des Auslaufrohres 1 an die selbstfahrende Erntemaschine, nicht mehr aus dem Auslaufrohr 1 herausrieseln. Wird ein neuer Entleervorgang gestartet, so wird die Klappe 10 über das Federelement 22 mit Drucklosschaltung des Hydraulikzylinders 16 durch das Hydraulikventil 19 wieder in die Öffnungsstellung bewegt.

Mittels einer erfindungsgemäßen Ausgestaltung einer Entleervorrichtung ist es somit möglich, Rieselverluste bei einer selbstfahrenden Erntemaschine zu vermeiden, wobei die erfindungsgemäße Entleervorrichtung hierbei eine geringe Störanfälligkeit aufweist. Zudem ist eine gute Regelbarkeit der Entleervorrichtung und der diese verschließenden Klappe über eine übergeordnete Steuerung möglich.

### Bezugszeichenliste

- 1: Auslaufrohr
- 2: Förderschnecke
- 3: Lageraufnahme
- 4: Wälzlager
- 5: Nabe
- 6: Verstrebung
- 7: Tragrahmen
- 8: Blechsegment
- 9: Blechsegment
- 10: Klappe
- 11: Drehachse
- 12: Lagerbrücke
- 13: Lagerbrücke
- 14: Wellenstummel
- 15: Betätigungseinrichtung
- 16: Hydraulikzylinder
- 17: Gestänge
- 18: Steuerung
- 19: Hydraulikventil
- 20: Druckleitung
- 21: Vorratsbehälter
- 22: Federelement
- 23: Kontur

## Patentansprüche

1. Entleervorrichtung für einen Sammeltank einer selbstfahrenden Erntemaschine mit einer in einem Auslaufrohr (1) gelagerten Förderschnecke (2), die während eines Entleervorganges antreibbar ist, wobei in einem auslassseitigen Endbereich des Auslaufrohrs (1) zur Lagerung der Förderschnecke (2) eine zentrische Lageraufnahme (3) vorgesehen ist und das Auslaufrohr (1) im Endbereich eine Klappe (10) aufweist, die um eine Drehachse (11) schwenkbar und über eine Betätigungseinrichtung (15) gezielt aus einer Öffnungsstellung in eine Schließstellung und umgekehrt überführbar ist, **dadurch gekennzeichnet, dass** die Drehachse (11) der Klappe (10) innerhalb eines Förderquerschnittes des Auslaufrohres (1) angeordnet ist, wobei die Drehachse (11) der Klappe (10) unmittelbar auf einer vom Ende der Förderschnecke (2) abgewandten Seite einer radial im Auslaufrohr (1) verlaufenden Verstrebung (6) der Lageraufnahme (3) angeordnet ist, wobei die Drehachse (11) der Klappe (10) parallel zu der Verstrebung (6) verlaufend ausgerichtet ist.

2. Entleervorrichtung nach Anspruch 1, **dadurch gekennzeichnet, dass** die Klappe (10) eine im Wesentlichen kreissegmentförmige Außenkontur aufweist, dass die Klappe (10) an der die Längsachse der Förderschnecke (2) kreuzenden Drehachse (11) geführt ist und in ihrer Schließstellung einen unteren Kreisabschnitt des Auslaufrohres (1) abdeckt.

3. Entleervorrichtung nach einem der Ansprüche 1 oder 2, **dadurch gekennzeichnet, dass** die Klappe (10) eine gewölbte Oberfläche aufweist.

4. Entleervorrichtung nach einem der Ansprüche 1 bis 3, **dadurch gekennzeichnet, dass** die Verstrebung (6) der Lageraufnahme (3) einen, sich in Richtung der Förderschnecke (2) erstreckenden, strömungsoptimierten Querschnitt (23) aufweist.

5. Entleervorrichtung nach einem der Ansprüche 1 bis 4, **dadurch gekennzeichnet, dass** die Klappe (10) zumindest im Bereich der Drehachse (11) eine sich zu einem der Drehachse (11) gegenüberliegenden Klappenende hin verjüngende Kontur aufweist.

6. Entleervorrichtung nach Anspruch 1, **dadurch gekennzeichnet, dass** Lagerungen der Klappe (10) als Lagerbrücken (12, 13) ausgestaltet sind, welche jeweils in Ausnehmungen des Auslaufrohrs (1) oder eines Tragrahmens (7) der Lageraufnahme (3) der Förderschnecke (2) befestigt sind.

7. Entleervorrichtung nach einem der vorhergehenden Ansprüche, **dadurch gekennzeichnet, dass** sich ein Ende eines die Drehachse (11) der Klappe (10) bildenden Wellenstummels (14) radial über das Auslaufrohr (1) hinaus erstreckt und an diesem außerhalb des Auslaufrohrs (1) die Betätigungseinrichtung (15) angreift.

8. Entleervorrichtung nach einem der vorhergehenden Ansprüche, **dadurch gekennzeichnet, dass** die Betätigungseinrichtung (15) ein Federelement (22) umfasst, welches die Klappe (10) in Richtung ihrer Öffnungsstellung vorspannt.

9. Entleervorrichtung nach einem der vorhergehenden Ansprüche, **dadurch gekennzeichnet, dass** die Betätigungseinrichtung (15) einen Aktuator (16) umfasst, über welchen die Klappe (10) in ihre Schließstellung überführbar ist.

10. Entleervorrichtung nach Anspruch 8 und 9, **dadurch gekennzeichnet, dass** das Federelement (22) in den Aktuator integriert ist.

11. Verfahren zum Steuern einer Entleervorrichtung gemäß einem der vorgenannten Ansprüche, **dadurch gekennzeichnet, dass** die Betätigungseinrichtung (15) über eine Steuerung (18) derart gesteuert wird, dass mit Beginn eines Entleerbetriebes die Klappe (10) in ihre Öffnungsstellung bewegt wird, während mit Ende des Entleerbetriebes die Klappe (10) in ihre Schließstellung überführt wird.

12. Verfahren nach Anspruch 11, **dadurch gekennzeichnet, dass** eine hydraulische Betätigungseinrichtung (15) vorgesehen ist, wobei ein Hydraulikventil (19) mit Beginn des Entleerbetriebes in einer ersten Stellung einen als Hydraulikzylinder (16) ausgebildeten Aktuator der Betätigungseinrichtung (15) drucklos schaltet, wohingegen das Hydraulikventil (19) mit Ende des Entleerbetriebes in eine zweite Stellung überführt wird, in welcher der Hydraulikzylinder (16) mit unter Druck stehendem Fluid beaufschlagt wird und dadurch die Klappe (10) in die Schließstellung verschwenkt.

## Claims

1. An emptying apparatus for a collecting tank of a self-propelled harvester comprising a conveyor screw (2) which is mounted in a discharge pipe (1) and which is drivable during an emptying operation, wherein provided in an outlet-side end region of the discharge pipe (1) for supporting the conveyor screw (2) is a central bearing receiving means (3) and the discharge pipe (1) in the end region as a flap (10) which is pivotable about an axis of rotation (11) and which can be transferred selectively from an open position into a closed position and vice-versa by way of an actuating device (15), **characterised in that** the axis of rotation (11) of the flap (10) is disposed within a conveyor cross-section of the discharge pipe (1), wherein the axis of rotation (11) of the flap (10) is arranged directly on a side, facing away from the end of the conveyor screw (2), of a strut (6) of the bearing receiving means (3), which strut extends radially in the discharge pipe (1), wherein the axis of rotation (11) of the flap (10) is oriented to extend parallel to the strut (6).

2. An emptying apparatus according to claim 1 **characterised in that** the flap (10) has an outside contour substantially in the shape of a segment of a circle, that the flap (10) is guided at the axis of rotation (11) which crosses the longitudinal axis of the conveyor screw (2) and in its closed position it covers a lower portion of the circle of the discharge pipe (1).

3. An emptying apparatus according to one of claims 1 and 2 **characterised in that** the flap (10) has a curved surface.

4. An emptying apparatus according to one of claims 1 to 3 **characterised in that** the strut (6) of the bearing receiving means (3) has a flow-optimised cross-section (23) extending in the direction of the conveyor screw (2).

5. An emptying apparatus according to one of claims 1 to 4 **characterised in that** at least in the region of the axis of rotation (11) the flap (10) is of a contour which narrows towards a flap end in opposite relationship to the axis of rotation (11).

6. An emptying apparatus according to claim 1 **characterised in that** mountings of the flap (10) are in the form of mounting bridges (12, 13) which are respectively fixed in openings in the discharge pipe (1) or a carrier frame (7) of the bearing receiving means (3) of the conveyor screw (2).

7. An emptying apparatus according to one of the preceding claims **characterised in that** an end of a stub shaft (14) forming the axis of rotation (11) of the flap (10) extends radially beyond the discharge pipe (1) and the actuating device (15) engages same outside the discharge pipe (1).

8. An emptying apparatus according to one of the preceding claims **characterised in that** the actuating device (15) includes a spring element (22) which prestresses the flap (10) in the direction of its open position.

9. An emptying apparatus according to one of the preceding claims **characterised in that** the actuating device (15) includes an actuator (16), by way of which the flap (10) can be transferred into its closed position.

10. An emptying apparatus according to claim 8 and claim 9 **characterised in that** the spring element (22) is integrated into the actuator.

11. A method of controlling an emptying apparatus according to one of the preceding claims **characterised in that** the actuating device (15) is controlled by way of a control means (17) in such a way that with the beginning of an emptying operation the flap (10) is moved into its open position while with the end of the emptying operation the flap (10) is transferred into its closed position.

12. A method according to claim 11 **characterised in that** there is provided a hydraulic actuating device (15), wherein with the beginning of the emptying operation a hydraulic valve (19) in a first position switches an actuator of the actuating device (15), that is in the form of a hydraulic cylinder (16), into a pressure-less state, whereas with the end of the emptying operation the hydraulic valve (19) is transferred into a second position in which the hydraulic cylinder (16) is acted upon with fluid under pressure and thereby pivots the flap (10) into the closed position.

## Revendications

1. Dispositif de vidage pour une trémie d'une machine de récolte automotrice, comprenant une vis de convoyage (2) qui est logée dans un tube de décharge (1) et qui peut être commandée pendant l'opération de vidage, dans une zone d'extrémité côté sortie du tube de décharge (1) étant prévu un support à palier centré (3) pour supporter la vis de convoyage (2), et le tube de décharge comportant dans sa zone d'extrémité un clapet (10) qui peut pivoter autour d'un axe de rotation (11) et, par l'intermédiaire d'un dispositif d'actionnement (15), peut être transféré sélectivement d'une position d'ouverture à une position de fermeture et inversement, **caractérisé en ce que** l'axe de rotation (11) du clapet (10) est disposé à l'intérieur de la section de convoyage du tube de décharge (1), l'axe de rotation (11) du clapet (10) étant disposé immédiatement sur un côté, opposé à l'extrémité de la vis de convoyage (2), d'une entretoise (6) du support à palier (3), laquelle s'étend radialement dans le tube de décharge (1), l'axe de rotation (11) du clapet (10) étant orienté parallèlement à l'entretoise (6).

2. Dispositif de vidage selon la revendication 1, **caractérisé en ce que** le clapet (10) présente un contour extérieur sensiblement en forme de segment de cercle, **en ce que** le clapet (10) est guidé sur l'axe de rotation (11) croisant l'axe longitudinal de la vis de convoyage (2) et, dans sa position de fermeture, recouvre une portion circulaire inférieure du tube de décharge (1).

3. Dispositif de vidage selon une des revendications 1 ou 2, **caractérisé en ce que** le clapet (10) présente une surface arquée.

4. Dispositif de vidage selon une des revendications 1 à 3, **caractérisé en ce que** l'entretoise (6) du support à palier (3) présente une section à écoulement optimisé (23) qui s'étend en direction de la vis de convoyage (2).

5. Dispositif de vidage selon une des revendications 1 à 4, **caractérisé en ce que**, au moins dans la zone de l'axe de rotation (11), le clapet (10) présente un contour qui se rétrécit en direction d'une extrémité de clapet opposée à l'axe de rotation (11).

6. Dispositif de vidage selon la revendication 1, **caractérisé en ce que** des moyens de support du clapet (10) sont conformés en pontets de support (12, 13), lesquels sont chacun fixés dans des évidements du tube de décharge (1) ou d'un cadre porteur (7) du support à palier (3) de la vis de convoyage (2).

7. Dispositif de vidage selon une des revendications précédentes, **caractérisé en ce qu'**une extrémité d'un bout d'arbre (14) formant l'axe de rotation (11) du clapet (10) s'étend radialement au-delà du tube de décharge (1) et, au niveau de celui-ci, coopère avec le dispositif d'actionnement (15) à l'extérieur du tube de décharge (1).

8. Dispositif de vidage selon une des revendications précédentes, **caractérisé en ce que** le dispositif d'actionnement (15) comprend un élément de ressort (22) qui précontraint le clapet (10) en direction d'une position d'ouverture.

9. Dispositif de vidage selon une des revendications précédentes, **caractérisé en ce que** le dispositif d'actionnement (15) comprend un actionneur (16) qui permet de transférer le clapet (10) dans sa position de fermeture.

10. Dispositif de vidage selon la revendication 8 et 9, **caractérisé en ce que** l'élément de ressort (22) est intégré à l'actionneur.

11. Procédé pour commander un dispositif de vidage selon une des revendications précitées, **caractérisé en ce que** le dispositif d'actionnement (15) est commandé par l'intermédiaire d'un moyen de commande (18), de façon qu'au début d'une opération de vidage le clapet (10) soit déplacé dans sa position d'ouverture, tandis qu'à la fin de l'opération de vidage le clapet (10) est transféré dans sa position de fermeture.

12. Procédé selon la revendication 11, **caractérisé en ce qu'**un dispositif d'actionnement hydraulique (15) est prévu, au début de l'opération de vidage une soupape hydraulique (19) privant de pression, dans une première position, un actionneur du dispositif d'actionnement (15) conformé en vérin hydraulique (16), tandis qu'à la fin de l'opération de vidage la soupape hydraulique (19) est transférée dans une seconde position dans laquelle le vérin hydraulique (16) est alimenté par un fluide sous pression et, de ce fait, le clapet (10) bascule dans la position de fermeture.
